# EUROPEAN PATENT APPLICATION

(11) **EP 3 199 496 A1**
(43) Date of publication of application: **02.08.2017**
(21) Application number: 15844252.5
(22) Date of filing: 08.09.2015
(51) Int. Cl.: C02F 3/28, H01M 8/16, C02F 3/00, C02F 1/70, C02F 3/30, C02F 1/461

(54) **LIQUID PROCESSING UNIT AND LIQUID PROCESSING DEVICE**

(30) Priority: 26.09.2014 JP 2014196977
(71) Applicant: Panasonic Intellectual Property Management Co., Ltd., Osaka-shi, Osaka 540-6207 (JP)
(72) Inventor: YOSHIKAWA, Naoki, Osaka-shi, OSAKA 540-6207 (JP); KITADE, Yuuki, Osaka-shi, OSAKA 540-6207 (JP)
(74) Representative: Müller-Boré & Partner Patentanwälte PartG mbB
(86) International application number: PCT/JP2015/004554
(87) International publication number: WO 2016/047060

(57) **Abstract**

A liquid treatment unit (1) includes: an electrical conductor (5) including a first surface (2) and a second surface (3), and a space (4) provided between the first surface and the second surface in which hydrogen ions move; and a structure (6) arranged on the second surface to regulate an oxygen supply amount. A liquid treatment device (10) includes the liquid treatment unit, and a treatment tank (7) which keeps a liquid (9) to be treated, wherein the first surface of the electrical conductor in the liquid treatment unit is located inside the treatment tank.

## Description

### TECHNICAL FIELD

The present invention relates to liquid treatment units and liquid treatment devices. More particularly, the present invention relates to a liquid treatment unit and a liquid treatment device for purifying wastewater.

### BACKGROUND ART

Various kinds of water treatment methods have been provided for eliminating components such as organic matter included in wastewater. Particular examples of such water treatment methods include an activated sludge process by use of aerobic respiration of microorganisms, and an anaerobic treatment method by use of anaerobic respiration of microorganisms.

In the activated sludge process, sludge (activated sludge) including microorganisms is mixed with wastewater in an organism reaction tank, and air necessary for microorganisms to cause oxidative decomposition of organic matter in the wastewater is supplied to the organism reaction tank and then agitated, so as to purify the wastewater. The activated sludge process, however, requires vast amounts of electric power used for aeration in the organism reaction tank. In addition, large amounts of sludge (wastes of microorganisms) as industrial wastes are produced as a result of active metabolism by oxygen respiration of the microorganisms.

The anaerobic treatment method, on the other hand, does not require aeration, so as to reduce great amounts of electric power to be required, as compared with the activated sludge process. Further, since free energy gained by microorganisms is small, the amount of sludge produced is decreased. A wastewater treatment device using such an anaerobic treatment method is disclosed in which anaerobic microorganisms adhere to a support including particles of a hydrogen storage alloy (for example, refer to Patent Literature 1).

### CITATION LIST

### PATENT LITERATURE

Patent Literature 1 : Japanese Unexamined Patent Application Publication No. H01-047494

### SUMMARY OF INVENTION

The conventional anaerobic treatment method has a problem of producing biogas, as a product of anaerobic respiration, containing a large amount of combustible methane gas having a peculiar smell.

The present invention has been made in view of the above-described conventional problems. An object of the present invention is to provide a liquid treatment unit capable of reducing the amount of sludge produced and suppressing generation of biogas, and a liquid treatment device using the liquid treatment unit.

In order to solve the problems described above, a liquid treatment unit according to a first aspect of the present invention includes: an electrical conductor including a first surface and a second surface, and a space provided between the first surface and the second surface in which hydrogen ions move; and a structure arranged on the second surface to regulate an oxygen supply amount.

A liquid treatment device according to a second aspect of the present invention includes the liquid treatment unit, and a treatment tank which keeps a liquid to be treated, wherein the first surface of the electrical conductor in the liquid treatment unit is located inside the treatment tank.

### BRIEF DESCRIPTION OF DRAWINGS

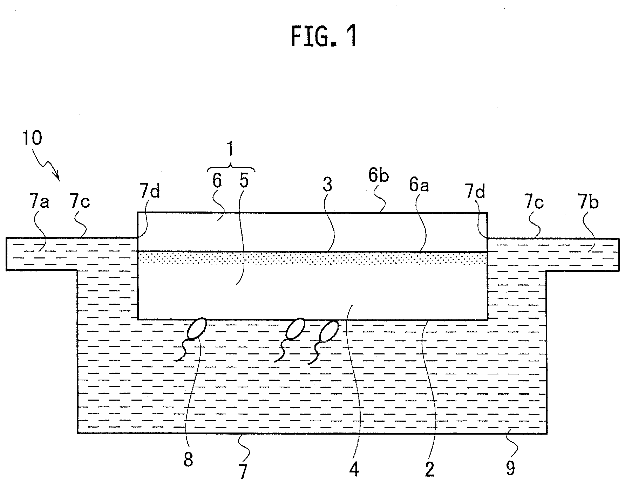

[Fig. 1] Fig. 1 is a schematic cross-sectional view showing an example of a liquid treatment device according to an embodiment of the present invention.

### DESCRIPTION OF EMBODIMENTS

A liquid treatment unit according to the present embodiment and a liquid treatment device using the liquid treatment unit will be described in detail below. The dimensions in the drawings may be exaggerated for illustration purposes, and are not necessarily drawn to scale.

As shown in Fig. 1, a liquid treatment device 10 according to the present embodiment includes a liquid treatment unit 1 for decomposing a component, such as organic matter, in a liquid 9 to be treated by an electrochemical reaction, and a treatment tank 7 for keeping the liquid 9.

The liquid treatment unit 1 includes an electrical conductor 5 having a first surface 2 and a second surface 3. More particularly, the liquid treatment unit 1 includes the electrical conductor 5 having a substantially rectangular parallelepiped having the first surface 2 and the second surface 3 opposed to the first surface 2. The first surface 2 and the second surface 3 define the outer surface of the electrical conductor 5, and may be inexact surfaces when the outer surface of the electrical conductor 5 is a porous body. According to the present embodiment, the first surface 2 is located on the upstream side in a moving direction of hydrogen ions and electrons inside the electrical conductor 5, and the second surface 3 is located on the downstream side. The first surface 2 and the second surface 3 of the electrical conductor 5 are located inside the treatment tank 7.

The electrical conductor 5 further includes a space 4 between the first surface 2 and the second surface 3 in which hydrogen ions (H⁺) move. Since the space (void) is continuously provided in the electrical conductor 5 in the thickness direction, the hydrogen ions generated on the first surface 2 side can move toward the second surface 3.

The electrical conductor 5 may have any structure that includes the space 4 and provides electrical connection from the first surface 2 to the second surface 3. The electrical conductor 5 may continuously extend from the first surface 2 toward the second surface 3. Alternatively, the electrical conductor 5 may include a plurality of electrical conducting parts electrically connected to each other. For example, the electrical conductor 5 may be obtained such that a plurality of electrical conducting layers electrically connected to each other are stacked on one another. When an electrical resistance between the first surface 2 and the second surface 3 in the electrical conductor 5 is decreased to a small level, electrons generated by decomposition of organic matter can move smoothly, so as to achieve higher treatment efficiency.

At least part of material included in the electrical conductor 5 may continuously extend from the first surface 2 toward the second surface 3, and may extend across the space 4. Namely, at least part of the material included in the electrical conductor 5 may extend in the direction perpendicular to a stacking direction of the electrical conductor 5 and a structure 6 described below.

The material of the electrical conductor 5 may be any material that can ensure electrical conductivity, and may be at least one kind selected from the group consisting of electrically conductive metal, a carbon material, and an electrically conductive polymer material. An example of the electrically conductive metal may be at least one kind selected from the group consisting of aluminum, copper, stainless steel, nickel, and titanium. An example of the carbon material may be at least one kind selected from the group consisting of carbon paper, carbon felt, carbon cloth, and graphite foil. An example of the electrically conductive polymer material may be at least one kind selected from the group consisting of polyacetylene, polythiophene, polyaniline, poly(p-phenylene vinylene), polypyrrole, and poly(p-phenylene sulfide).

As described above, since the electrical conductor 5 is required to include the space 4 for hydrogen ions to move between the first surface 2 and the second surface 3, the space (void) is preferably continuously provided in the stacking direction of the electrical conductor 5 and the structure 6. The electrical conductor 5 preferably includes an electrically conductive porous sheet in order to ensure the space. The electrical conductor 5 is more preferably formed of an electrically conductive porous sheet. Since the electrically conductive porous sheet has multiple pores, hydrogen ions can easily move therethrough.

The electrical conductor 5 preferably includes at least one of an electrically conductive woven sheet or an electrically conductive nonwoven sheet. Since the electrically conductive woven sheet and the electrically conductive nonwoven sheet have multiple pores, these sheets can facilitate the movement of hydrogen ions. The electrical conductor 5 may be a metal plate having a plurality of penetration holes provided between the first surface 2 and the second surface 3.

The electrical conductor 5 more preferably includes the electrically conductive nonwoven sheet, and is particularly preferably formed of the electrically conductive nonwoven sheet. Since a thickness and porosity of nonwoven fabric can easily be changed, the nonwoven fabric can easily provide a structure in which an anaerobic microorganism group 8 is supported on the first surface 2, and an oxygen reduction catalyst is supported on the second surface 3, as described below. The pores provided in the space 4 of the electrical conductor 5 may have any diameter that can allow the hydrogen ions to move from the first surface 2 toward the second surface 3.

The liquid treatment device 10 according to the present embodiment uses the anaerobic microorganism group 8 to cause oxidative decomposition of organic matter or a nitrogen-containing compound included in the liquid 9 to be treated. The first surface 2 of the electrical conductor 5 therefore preferably supports the anaerobic microorganism group 8. Namely, the anaerobic microorganism group 8 preferably adheres to the first surface 2 of the electrical conductor 5. The anaerobic microorganism group 8 supported can contribute to efficiently purifying the liquid 9 by a local cell reaction. The anaerobic microorganism group 8 is not necessarily supported on the electrical conductor 5, and may exhibit similar effects when suspended in the liquid 9 in the treatment tank 7.

The liquid treatment unit 1 includes the electrical conductor 5 as described above, and further includes the structure 6 arranged on the second surface 3 of the electrical conductor 5 to regulate the amount of oxygen supplied. The structure 6 has oxygen penneability to supply oxygen to the second surface 3 of the electrical conductor 5. The structure 6 has a substantially rectangular parallelepiped having a surface 6a facing the second surface 3 of the electrical conductor 5 and a surface 6b located on the opposite side of the surface 6a. As shown in Fig. 1, the surface 6a facing the second surface 3 of the electrical conductor 5 is located inside the treatment tank 7, and the opposite surface 6b is located outside the treatment tank 7.

The structure 6 is preferably arranged partly or continuously on the second surface 3 of the electrical conductor 5. The structure 6 is more preferably arranged to cover the entire second surface 3 of the electrical conductor 5 in order to promote the local cell reaction described in detail below.

The structure 6 is preferably in contact with the electrical conductor 5, as shown in Fig. 1, in order to efficiently supply oxygen to the second surface 3 of the electrical conductor 5. In particular, the surface 6a of the structure 6 facing the second surface 3 is preferably in contact with the second surface 3 of the electrical conductor 5. This arrangement can supply oxygen directly to the second surface 3 in contact with the structure 6, so as to accelerate the local cell reaction described in detail below. A gap may be present between the second surface 3 of the electrical conductor 5 and the surface 6a of the structure 6 as long as oxygen can efficiently be supplied to the second surface 3 of the electrical conductor 5.

The structure 6 preferably has water repellency. The structure 6 is more preferably a water-repellent sheet. As shown in Fig. 1, the structure 6 separates the liquid 9 to be treated (a liquid phase) kept in the treatment tank 7 from a gas phase including oxygen. The term "separation" as used herein refers to physical isolation. The structure 6 can prevent the organic matter or the nitrogen-containing compound included in the liquid 9 from moving toward the gas phase, and also prevent an oxygen molecule on the gas phase side from excessively moving to the liquid 9. This can surely keep the treatment tank 7 in anaerobic condition so as to avoid the presence of molecular oxygen. Since the propagation of aerobic microorganisms in the treatment tank 7 can be suppressed, the liquid treatment can surely be performed in the anaerobic condition.

The side surface of the structure 6 may be entirely connected to an edge 7d of an upper surface 7a of the treatment tank 7, as shown in Fig. 1, so as to separate the liquid 9 to be treated from the gas phase. Thus, the liquid 9 can be prevented from leaking out of the edge 7d of the treatment tank 7.

The structure 6 may include any material that has a function to regulate the oxygen supply amount, namely has oxygen permeability, and more preferably has water repellency. An example of the material used for the structure 6 may be at least one of silicone rubber or polydimethylsiloxane. These materials have high oxygen solubility and oxygen diffusibility derived from a molecular structure of silicone, and therefore have high oxygen permeability. These materials also have high water repellency because surface free energy is small.

The material used for the structure 6 may also be a nonwoven fabric such as a waterproof and breathable film or a nonwoven fabric of polyethylene or polypropylene. More particularly, the material used for the structure 6 may be Gore-Tex (registered trademark) in which an expanded polytetrafluoroethylene film and a polyurethane polymer are combined together.

The liquid treatment device according to the present embodiment widely encompasses devices that decompose or eliminate at least part of a component included in a liquid to be treated. The liquid treatment device includes the liquid treatment unit 1, and the treatment tank 7 for keeping the liquid 9 to be treated. As shown in Fig. 1, the treatment tank 7 includes the upper surface 7c having an opening of which the edge 7d is connected to the entire side surface of the structure 6. As described above, the structure 6 separates the liquid 9 kept in the treatment tank 7 from the gas phase including oxygen, so as to keep the treatment tank 7 in anaerobic condition in which the amount of molecular oxygen is small. Accordingly, the liquid 9 can be kept in the treatment tank 7 while being prevented from coming into contact with oxygen in the air.

The treatment tank 7 may have a structure through which the liquid 9 to be treated flow. For example, as shown in Fig. 1, the treatment tank 7 may include a liquid supply port 7a from which the liquid 9 is supplied into the treatment tank 7, and a liquid drain port 7b from which the treated liquid 9 is discharged outside the treatment tank 7.

The liquid to be treated by the liquid treatment device according to the present embodiment may be a liquid including organic matter or a compound including nitrogen (a nitrogen-containing compound), or a liquid including both the organic matter and the compound. The liquid to be treated may also be an electrolysis solution.

Next, the effects of the liquid treatment device according to the present embodiment are described below. The liquid treatment device 10 according to the present embodiment includes the liquid treatment unit 1 including the electrical conductor 5 having the first surface 2 and the second surface 3 and having the space 4 between the first surface 2 and the second surface 3 in which hydrogen ions move, and the structure 6 arranged on the second surface 3 to regulate the oxygen supply amount. The liquid treatment device 10 includes the liquid treatment unit 1, and further includes the treatment tank 7 for keeping the liquid 9 to be treated, wherein the first surface 2 of the electrical conductor 5 in the liquid treatment unit 1 is located inside the treatment tank 7. The liquid treatment device 10 having this structure uses the metabolism of the anaerobic microorganism group 8 to cause the oxidation reaction of at least one of the organic matter and the nitrogen-containing compound included in the liquid 9 on the first surface 2 side of the electrical conductor 5. The hydrogen ions (H⁺) generated by the oxidation reaction are transferred toward the second surface 3 of the electrical conductor 5 through the space 4 inside the electrical conductor 5. The electrons (e⁻) generated by the oxidation reaction are transferred toward the second surface 3 through the electrical conductor 5.

Further, oxygen in the air outside the liquid treatment device 10 passes through the structure 6 and is transferred toward the second surface 3 of the electrical conductor 5. The electrons and hydrogen ions transferred from the first surface 2 side react with an oxygen molecule transferred through the structure 6, so as to cause a reduction reaction of oxygen on the second surface 3 of the electrical conductor 5. Since the oxidation reaction of the organic matter and the nitrogen-containing compound progresses on the first surface 2 side of the electrical conductor 5, and the reduction reaction of the oxygen progresses on the second surface 3 side, the liquid treatment device entirely serves as a local cell circuit.

As described above, the liquid treatment device 10 according to the present embodiment can efficiently execute the oxidative decomposition of the component (the organic matter or the nitrogen-containing compound) included in the liquid 9 to be treated through the electron transition reaction. More particularly, the organic matter or the nitrogen-containing compound included in the liquid 9 is decomposed or eliminated by the metabolism of anaerobic microorganisms, namely the propagation of microorganisms. Since the oxidative decomposition treatment is executed in the anaerobic condition, the transformation from the organic matter to new cells of microorganisms can be reduced to a low level, as compared with the treatment executed in aerobic condition. Accordingly, the propagation of microorganisms, namely the amount of sludge produced can be decreased, as compared with the case by use of the activated sludge process. While typical anaerobic treatment produces methane gas having a peculiar smell, the oxidative decomposition treatment according to the present embodiment can minimize the production of methane gas because a metabolite is carbon dioxide (CO₂), for example, as described below.

In addition, the liquid treatment device 10 according to the present embodiment does not require additional elements including wiring such as an external circuit, a current collector, and a boosting system, which are typically provided in microorganism fuel cells. Further, since the structure of the liquid treatment unit 1 can be simplified, the entire thickness can be decreased to result in a reduction in size of the liquid treatment device 10.

An example of the local cell reaction used in the present embodiment is described in detail below. The liquid 9 to be treated kept in the treatment tank 7 includes a component such as organic matter and a nitrogen-containing compound. Part of the component in the liquid 9 is metabolized by the anaerobic microorganism group 8 around the first surface 2 of the electrical conductor 5. This metabolism produces electrons, and discharges carbon dioxide and hydrogen ions as a metabolite. The produced electrons flow into the first surface 2, pass through the electrical conductor 5, and move toward the second surface 3. The produced hydrogen ions pass through the space 4 inside the electrical conductor 5 and move toward the second surface 3. The oxygen molecule transferred through the structure 6 is bonded to the transferred electrons and hydrogen ions so as to produce a water molecule around the second surface 3 of the electrical conductor 5.

For example, when the liquid 9 to be treated includes glucose as organic matter, the local cell reaction (half-cell reaction) is represented by the following expressions.
- First surface 2 of electrical conductor 5 (anode): C₆H₁₂O₆ + 6H₂O → 6CO₂ + 24H⁺ + 24e⁻
- Second surface 3 of electrical conductor 5 (cathode): 6O₂ + 24H⁺ + 24e⁻ → 12H₂O

When the liquid 9 to be treated includes ammonia as a nitrogen-containing compound, the local cell reaction is represented by the following expressions.
- First surface 2 of electrical conductor 5 (anode): 4NH₃ → 2N₂ + 12H⁺ + 12e⁻
- Second surface 3 of electrical conductor 5 (cathode): 3O₂ + 12H⁺ + 12e⁻ → 6H₂O

The liquid treatment device 10 uses the both end sides of the electrical conductor 5 to function as two electrodes for the cell reaction so as to integrate the two electrodes. In particular, the first surface 2 of the electrical conductor 5 can serve as an anode, and the second surface 3 can serve as a cathode. The liquid treatment device 10 does not require additional elements including wiring such as an external circuit, a current collector, and a boosting system, which are typically provided in microorganism fuel cells. Thus, a simple system configuration can be achieved. Further, since the present embodiment short-circuits the anode (the first surface 2) and the cathode (the second surface 3) so as not to generate power, the efficiency of treating the liquid can be further improved.

In the liquid treatment unit 1 according to the present embodiment, at least part of the surface of the electrical conductor 5 is preferably covered with an electrically insulating material. More particularly, the surface of the electrical conductor 5 corresponding to the space 4 provided between the first surface 2 and the second surface 3 is preferably covered with an electrically insulating material. The contact between the electrons flowing through the electrical conductor 5 and the hydrogen ions flowing through the space 4 can therefore be prevented more accurately in the space 4. Accordingly, the reaction between the electrons and the hydrogen ions can be prevented during the movement from the first surface 2 toward the second surface 3 of the electrical conductor 5, so as to efficiently transmit the electrons and the hydrogen ions toward the second surface 3. The surface of the electrical conductor 5, excluding the first surface 2 and the second surface 3, may be entirely covered with an electrically insulating material. The electrically insulating material may be any material that provides electrical insulation, and examples thereof include natural rubber, synthetic resin, and glass fiber.

The liquid treatment device 10 shown in Fig. 1 uses the anaerobic microorganism group 8 to cause the oxidation reaction of the organic matter and the nitrogen-containing compound included in the liquid 9 to be treated on the first surface 2 side of the electrical conductor 5. Alternatively, a catalyst material such as an oxidation catalyst may be used for the oxidation reaction of the component such as organic matter included in the liquid 9. The oxidation reaction of the component such as organic matter may be induced by use of one of or both of the anaerobic microorganism group and the catalyst material. The oxidation catalyst in this case may be supported on the first surface 2 of the electrical conductor 5.

In addition, the electrical conductor 5 may support an oxygen reduction catalyst on the second surface 3. The reaction between oxygen transferred through the structure 6 and the hydrogen ions passing through the space 4 inside the electrical conductor 5 and transferred toward the second surface 3, can be promoted to increase the efficiency of the reduction reaction of oxygen, so as to execute the liquid treatment more efficiently. As described above, oxygen in the air permeates through the structure 6. When the oxygen reduction catalyst is supported on the second surface 3, the permeating oxygen is easily consumed by the oxygen reduction catalyst, so as to more surely prevent the oxygen from being mixed into the liquid 9 to be treated, and keep the treatment tank 7 in higher anaerobic condition.

The oxygen reduction catalyst which may be supported on the electrical conductor 5 preferably, but not necessarily, includes platinum. The oxygen reduction catalyst may include carbon particles doped with at least one kind of nonmetal atoms and metal atoms. The doped atoms introduced into the carbon particles may be any atoms. Examples of nonmetal atoms include nitrogen atoms, boron atoms, sulfur atoms, and phosphorus atoms. Examples of metal atoms include iron atoms and copper atoms.

The first surface 2 of the electrical conductor 5 according to the present embodiment may be modified with an electron transport mediator molecule. Alternatively, the liquid 9 to be treated in the treatment tank 7 may include an electron transport mediator molecule. The presence of the molecule can promote the electron transfer from the anaerobic microorganisms to the electrical conductor 5, so as to execute the liquid treatment more efficiently. The effects derived from the mediator molecule are described in more detail below.

The communication of electrons with cells or a terminal electron acceptor is implemented by a metabolism mechanism of the anaerobic microorganisms. Once the mediator molecule is introduced into the liquid 9 to be treated, the mediator molecule serves as a terminal electron acceptor, and transfers the received electrons to the electrical conductor 5. Accordingly, the rate of oxidation decomposition of the component such as organic matter in the liquid 9 can be increased. The similar effects can be obtained when the mediator molecule is supported on the first surface 2 of the electrical conductor 5.

An example of such an electron transport mediator molecule may be, but not limited to, at least one material selected from the group consisting of neutral red, anthraquinone-2,6-disulfonate (AQDS), thionine, potassium ferricyanide, and methyl viologen.

While the present embodiment has been described above, the present embodiment is not intended to be limited to the descriptions thereof, and various modifications will be made within the scope of the present embodiment. The liquid treatment device according to the present embodiment may be applicable to various kinds of treatment for liquid including organic matter and a nitrogen-containing compound, such as wastewater produced from various types of industrial factories, and organic wastewater such as sewage sludge. Further, the liquid treatment device may also be utilized for environmental improvement in waters.

The entire content of Japanese Patent Application No. P2014-196977 (filed on September 26, 2014) is herein incorporated by reference.

### INDUSTRIAL APPLICABILITY

The liquid treatment unit and the liquid treatment device according to the present invention execute oxidative decomposition of a component such as organic matter included in a liquid to be treated by use of a local cell reaction. Therefore, the amount of sludge generated can be reduced, and the generation of biogas containing a large amount of combustible methane gas having a peculiar smell can be minimized. Further, the unit and the device do not require additional elements such as an external circuit which are typically provided in microorganism fuel cells, so as to simplify the configuration thereof.

### REFERENCE SIGNS LIST

- 1: LIQUID TREATMENT UNIT
- 2: FIRST SURFACE
- 3: SECOND SURFACE
- 4: SPACE
- 5: ELECTRICAL CONDUCTOR
- 6: STRUCTURE
- 7: TREATMENT TANK
- 8: ANAEROBIC MICROORGANISM GROUP
- 9: LIQUID TO BE TREATED
- 10: LIQUID TREATMENT DEVICE

## Claims

1. A liquid treatment unit comprising:
an electrical conductor including a first surface and a second surface, and a space provided between the first surface and the second surface in which hydrogen ions move; and
a structure arranged on the second surface to regulate an oxygen supply amount.

2. The liquid treatment unit according to claim 1, wherein the electrical conductor supports an oxygen reduction catalyst on the second surface.

3. The liquid treatment unit according to claim 1 or 2, wherein the electrical conductor includes an electrically conductive porous sheet.

4. The liquid treatment unit according to claim 1 or 2, wherein the electrical conductor includes at least one of an electrically conductive woven sheet or an electrically conductive nonwoven sheet.

5. The liquid treatment unit according to any one of claims 1 to 4, wherein at least part of a surface of the electrical conductor is covered with an electrically insulating material.

6. The liquid treatment unit according to any one of claims 1 to 5, wherein the structure is a water-repellent sheet.

7. A liquid treatment device comprising:
the liquid treatment unit according to any one of claims 1 to 6; and
a treatment tank which keeps a liquid to be treated,
wherein the first surface of the electrical conductor in the liquid treatment unit is located inside the treatment tank.

8. The liquid treatment device according to claim 7, wherein the electrical conductor supports an anaerobic microorganism group on the first surface, and supports an oxygen reduction catalyst on the second surface.
